(19) Europäisches Patentamt
European Patent Office
Office européen des brevets

(11) Veröffentlichungsnummer: **0 022 249**
**B1**

# (12) EUROPÄISCHE PATENTSCHRIFT

(45) Veröffentlichungstag der Patentschrift: **04.11.81**

(51) Int. Cl.³: **C 07 C 103/76**, A 01 N 37/18

(21) Anmeldenummer: **80103785.4**

(22) Anmeldetag: **03.07.80**

(54) **Benzamidderivate, deren Herstellung und diese enthaltende herbizide Zusammensetzungen.**

(30) Priorität: **04.07.79 DE 2926982**

(43) Veröffentlichungstag der Anmeldung: **14.01.81 Patentblatt 81/2**

(45) Bekanntmachung des Hinweises auf die Patenterteilung: **04.11.81 Patentblatt 81/44**

(84) Benannte Vertragsstaaten: **AT BE CH DE FR GB IT LI NL SE**

(56) Entgegenhaltungen:
**DE-A-1 958 180**
**FR-A-1 553 199**
**FR-A-2 186 190**
**US-A-4 054 576**
**JOURNAL OF AGRICULTURAL AND FOOD CHEMISTRY,**
**Vol. 19, Nr. 3, 1971,**
**C. SWITHENBANK et al.:**
**»Relationship of chemical structure and herbicidal activity in dimethylpropynylbenzamides«,**
**Seiten 417—421**

(73) Patentinhaber: **Consortium für elektrochemische Industrie GmbH, Zielstattstrasse 20, D-8000 München 70 (DE)**

(72) Erfinder: **Kaufmann, Rudolf, Dr. Dipl.-Chem., Wackerstrasse 5, D-8263 Burghausen (DE)**
Erfinder: **Kinzel, Peter, Ing. grad., Jägerkampstrasse 21a, D-8152 Westerham/Feldkirchen (DE)**
Erfinder: **Häberle, Norman, Dr. Dipl.-Chem., Willibaldstrasse 51a, D-8000 München 21 (DE)**
Erfinder: **Müller, Frank, Dr. Dipl.-Chem., Korbinian-Westermair-Strasse 9, D-8011 Siegertsbrunn (DE)**

EP 0 022 249 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Benzamidderivate, deren Herstellung und diese enthaltende herbizide Zusammensetzungen

Gegenstand der Erfindung sind neue substituierte Benzamide der allgemeinen Formel

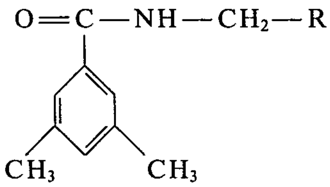

wobei R für den Vinyl- oder den Äthinylrest steht und ihre Anwendung als Herbizide allein, oder in Kombination mit anderen pestizid- oder herbizid wirksamen Substanzen. Vorzugsweise werden sie in Form von flüssigen oder festen Mischungen, oder flüssigen oder festen Lösungen ausgebracht.

Aufgabe der Erfindung war es, ein Herbizid mit selektiv phytotoxischer Wirkung zu erhalten, das bei Toleranz gegenüber Nutzpflanzen eine hohe Wirksamkeit gegenüber unerwünschten Pflanzen in Kulturpflanzungen besitzt.

Aus der Reihe der Benzamide ist bereits eine Anzahl von Verbindungen bekanntgeworden, die herbizide Wirkungen aufweisen. In den US-Patentschriften 3 534 098 und 3 640 699 werden 3,5-disubstituierte 1,1-Dimethylpropinylbenzamide und ihre Anwendung als Herbizide beschrieben. Als Substituenten in 3,5-Stellung werden F, Cl, Br oder der Methylrest angegeben.

In der US-Patentschrift 3 551 484 werden N-(1,1-Dimethylpropenyl)-3,5-disubstituierte Benzamide und ihre herbiziden Eigenschaften beschrieben.

Besondere Bedeutung hat aus dieser Reihe das 3,5-Dichlor-N-(1,1-dimethylpropinyl)-benzamid erreicht, das unter der Bezeichnung »Kerb$^{R}$« bekannt und im Handel erhältlich ist, das allerdings in seiner phytotoxischer Wirkung nicht die wünschenswerte Toleranz gegenüber einer Reihe von Nutzpflanzen besitzt.

Im J. Agr. Food Chem. Vol. 19, Nr. 3, 1971, P 417—21, werden die Beziehungen zwischen Struktur und herbizider Aktivität einer Reihe von Benzamiden untersucht, die verwandte Strukturen zum 3,5-Dichlor-N-(1,1-dimethylpropinyl)-benzamid aufweisen. In dieser Arbeit wird gezeigt, daß die 3,5-Disubstitution am Aromaten zu den besten Ergebnissen führt. Es wird darauf hingewiesen, daß die 3,5-Dimethylsubstitution die 3,5-Dichlorsubstitution in der Wirkung nicht übertrifft. Am Beispiel der 3,5-Dichlorsubstitution wird weiterhin aufgeführt, daß die Aktivität von Propylamid über das Allylamid zum Propargylamid steigt und daß die Wirksamkeit noch verstärkt wird durch Dimethylsubstitution am ersten Kohlenstoffatom des Alkylteils.

Die beiden neuen erfindungsgemäßen Verbindungen sind nicht 3,5-Dichlor-, sondern 3,5-Dimethylsubstituiert und weisen keine Dimethylsubstitution am Alkylrest des Amidteils auf. Diese beiden Veränderungen im Aufbau der Moleküle hätten nach Aussage der oben zitierten Untersuchungen aber zu einer Verschlechterung der herbiziden Wirksamkeit führen müssen.

Aufgrund dieser Untersuchungen war es nicht zu erwarten, und es ist daher als überraschend anzusehen, daß die beiden erfindungsgemäßen Verbindungen eine derart hohe herbizide Potenz bei gleichzeitig verbesserter Selektivität d. h. Nutzpflanzenverträglichkeit aufweisen. So erreichen oder übertreffen die erfindungsgemäßen Verbindungen beispielsweise das bekannte 3,5-Dichlor-N-(1,1-dimethylpropinyl)-benzamid in ihrer herbiziden Wirkung.

Die hohe Bedeutung der neuen Wirkstoffe für den Einsatz in der Landwirtschaft soll am Beispiel der Kulturpflanze Winterraps näher erläutert werden:

Winterraps wird im Herbst nach anderen wichtigen Kulturen wie z. B. Getreide angesät. Es ist eine bekannte Tatsache, daß eine größere Menge an Getreidekörnern vor der Ernte und beim Drusch des Getreides verlorengehen und auf den Ackerboden gelangen. Diese Körner keimen nach dem Anbau der Nachfolgekultur als sogenanntes Ausfallgetreide wieder aus. Die aufwachsenden Getreidepflanzen stellen für den Winterraps eine erhebliche Konkurrenz um Wasser, Nährstoffe, Licht und Raum dar und können wegen starker Ertragsminderung nicht toleriert werden.

Ein Herbizid, das dieses Ausfallgetreide und die verschiedenen Ungräserarten bei gleichzeitiger Schonung der Kulturpflanze bekämpft, ist für die moderne Landwirtschaft von hohem Wert.

Die herbizide Wirkung der erfindungsgemäßen Verbindungen erstreckt sich vor allem auf stark ertragsmindernde Ungräser-Arten wie z. B. Flughafer, Ackerfuchsschwanz, Windhalm, Rispengräser (z. B. Schmiele, Straußgras, Trespe, Poa-Arten), Ährengräser (z. B. Weidelgras, Kammgras), Hirse-Arten (z. B. Hühnerhirse, Borstenhirse), auf das Ausfallgetreide allgemein (z. B. Weizen, Gerste, Roggen, Hafer, sowie auf wichtige dikotyle Unkräuter, wie z. B. Knötericharten, Ehrenpreis, Taubnessel, Vogelmiere u. a.).

Beispiele für landwirtschaftliche- und gartenbauliche Kulturen, in denen sich die erfindungsgemäßen Wirkstoffe zum selektiven herbiziden Einsatz eignen, sind:
Raps, Senf, Zuckerrüben, Luzerne, Kartoffeln, Gemüse-Kohlarten (z. B. Weiß-, Rot- und Blumenkohl), Rettich, Kopfsalat und Endivie, Sonnenblume, Artischocke, sowie Zierpflanzenstauden aus der Familie

der Compositae (z. B. Chrysanthemen, Astern, Dahlien).

Die Darstellung der erfindungsgemäßen neuen Verbindungen kann in an sich bekannter Weise erfolgen, in dem man von der 3,5-Dimethylbenzoesäure ausgeht, die im Handel erhältlich ist. Diese wird mit z. B. Thionylchlorid oder Phosphorpentachlorid, vorzugsweise in Gegenwart eines inerten Lösungsmittels wie z. B. Benzol, Toluol, Petroläther oder Chloroform bei Temperaturen von 20°C bis 120°C in das Säurechlorid übergeführt. Im nächsten Reaktionsschritt wird das Säurechlorid übergeführt. Im nächsten Reaktionsschritt wird das Säurechlorid mit Allylamin bzw. Propargylamin bei Temperaturen von 20°C bis 120°C zum entsprechenden Amid umgesetzt. Um die bei der Reaktion entstehende Salzsäure zu binden, wird das entsprechende Amin im Überschuß zugesetzt, oder in Gegenwart einer Hilfsbase wie beispielsweise Triäthylamin oder Pyridin gearbeitet.

Die erfindungsgemäßen Verbindungen können allein oder im Gemisch ausgebracht werden. Im allgemeinen werden sie jedoch als Mischungen mit festen oder flüssigen Verdünnungsmitteln oder als Lösungen in festen oder flüssigen Lösungsmitteln verwendet mit Wirkstoffgehalten von 0,01 bis 95 Gew.-%.

Die Mischungen bzw. Lösungen werden im allgemeinen als Emulsionskonzentrate, Pasten, Spritzpulver, Granulate oder Mikrokapseln hergestellt.

Emulsionskonzentrate und Pasten enthalten im allgemeinen 10—60 Gew.-%, vorzugsweise 15—40 Gew.-% Wirkstoff, 2—25 Gew.-% Dispergierhilfsstoffe und organische Lösungsmittel und/oder Wasser. Spritzpulver enthalten meistens 10—80 Gew.-%, vorzugsweise 15—70 Gew.-% Wirkstoff, 1—10 Gew.-% Dispergierhilfsstoffe und 10—89 Gew.-% inerte Bestandteile.

Granulate und Mikrokapseln enthalten neben inerten Bestandteilen, Bindemitteln und/oder Überzugsstoffen, 1—10 Gew.-%, vorzugsweise 5—10 Gew.% Wirkstoff.

Erfindungsgemäß angewandt werden:

als Dispergierhilfsstoffe z. B.

Alkyl- und Arylsulfonate, Methylcellulose, polymere Sulfonsäuren und deren Salze, Polyalkohole, Fettsäureester, Fettalkoholäther, Fettamine,

als organische Lösungsmittel z. B.

Alkohole — wie Äthanol, Butanole, Dimethylformamid (DMF), Dimethylsulfoxid (DMSO), N-Methylpyrrolidon, Aromaten — wie Toluol und Xylole,

als inerte Bestandteile z. B.

Kaolin, China-Clay, Talkum, Calciumcarbonat, hochdisperse Kieselsäure, Kieselgele, Kieselgur, Diatomeenerde, Bims, Ziegelsplitt, Maisschrot, Verdickungsmittel — wie Stärke und Carboxymethylcellulose,

als Bindemittel z. B.

Magnesiumsulfat, Gips, Gummiarabikum.

Beispielsweise werden erfindungsgemäße Wirkstoffe zur Verwendung als Herbizide wie folgt formuliert:

1. Emulsionskonzentrat:

20 Gew.-% Wirkstoff
50 Gew.-% Isopropanol
20 Gew.-% Xylol
10 Gew.-% Spreit- und Haftmittel, Firmenbezeichnung Atplus 526 (Atlas-Chemie-Essen)

2. Spritzpulver:

20 Gew.-% Wirkstoff
44 Gew.-% China-Clay
16 Gew.-% hochdisperse Kieselsäure
15 Gew.-% Ligninsulfonat (Zellpech)
5 Gew.-% Natrium-alkylnaphthalinsulfonatformaldehyd-kondensat (»Atlox 4862«, eingetr. Warenzeichen).

Im allgemeinen werden die Wirkstoffe in Aufwandmengen von 0,5—8 kg/ha, vorzugsweise 2—4 kg/ha, ausgebracht.

Die Anwendung als Herbizid kann sowohl auf die Pflanzen (Nachauflaufverfahren) als auch auf vegetationsfreie Bodenoberflächen (Vorauflauf- und Vorsaatverfahren) erfolgen. Der größere herbizide Effekt wird mit einer Bodenapplikation erzielt, vorzugsweise bei Anwendung vor der Aussaat der Kulturpflanzen mit nachfolgender flacher, mechanischer Einarbeitung des ausgebrachten herbiziden Mittels in die obersten Schichten der Bodenoberfläche.

Im folgenden werden Darstellungsmethoden der erfindungsgemäßen Verbindungen und ihre herbiziden Eigenschaften an Hand von Beispielen erläutert:

## Beispiel 1

### Darstellung von 3,5-Dimethylbenzoesäureallylamid

#### 1. Stufe

In einem Dreihalskolben mit Rührer und Rückflußkühler werden 170 g (1,13 Mol) 3,5-Dimethylbenzoesäure zusammen mit 1500 g Toluol und ca. 2 g N,N-Dimethylformamid vorgelegt und auf ca. 70° C erwärmt. 202 g (1,7 Mol) Thionylchlorid werden unter Rühren zugetropft und auf Rückfluß erhitzt, bis die Gasentwicklung beendet ist. Danach wird das überschüssige Thionylchlorid und das Lösungsmittel abgezogen und der Rückstand im Vakuum destilliert. Man erhält 182,7 g 3,5-Dimethylbenzoesäurechlorid (95% der Theorie).

#### 2. Stufe

In einem Reaktionsgefäß werden 74 g (1,3 Mol) Allylamin und 131 g (1,3 Mol) Triäthylamin mit 1800 g Toluol vorgelegt und auf ca. 70° C erwärmt 182 g (1,08 Mol) 3,5-Dimethylbenzoesäurechlorid, vermischt mit 200 g Toluol werden innerhalb von etwa 1 Stunde zugetropft und bei 70—80° C noch 1 Stunde gerührt. Nachdem das Triäthylaminhydrochlorid abfiltriert ist, wird bis zur Neutralität mit Wasser gewaschen und das Toluol bei vermindertem Druck abgezogen. Als Reaktionsprodukt erhält man 201 g 3,5-Dimethylbenzoesäureallylamid mit in vielen Fällen ausreichender Reinheit als rotbraunes Öl entsprechend 98,5% der theoretischen Ausbeute. Will man das Produkt noch weiter reinigen, so kann es bei einem Druck von 0,05 Torr≙6,7 N/m$^2$ bei einer Temperatur von 140—145° C destilliert werden. Das Destillat erstarrt zu einer wachsartigen Masse mit einem Schmelzpunkt von 40—42° C.

## Beispiel 2

### Darstellung von 3,5-Dimethylbenzoesäurepropargylamid

Die Darstellung des Säurechlorids wird wie in Beispiel 1, 1. Stufe durchgeführt.

In der 2. Stufe werden in einem Dreihalskolben mit Rührer und Rückflußkühler 200 ml Toluol, 3 g (0,054 Mol) Propargylamin und 5,5 g (0,054 Mol) Triäthylamin vorgelegt, 9,2 g (0,054 Mol) 3,5-Dimethylbenzoylchlorid zugetropft und die Mischung 2 Stunden auf Rückfluß erhitzt. Die abgekühlte Mischung wird filtriert und das Filtrat mit insgesamt 150 ml $H_2O$ gewaschen. Bereits beim Waschen fällt ein Teil des Produkts aus, das abfiltriert wird. Die Toluolphase wird auf ca. 40 ml eingeengt, wobei weiteres Produkt in Form von weißen Kristallen ausfällt. Nach Trocknung im Trockenschrank erhält man eine Ausbeute von 7,5 g (73,6% d. Th.) 3,5-Dimethylbenzoesäurepropargylamid.

## Beispiel 3

Die herbizide Wirksamkeit der erfindungsgemäßen Stoffe bei einmaliger Anwendung wurde in Gewächshausversuchen getestet. Im dargestellten Test wurden zunächst die Samenkörner der Kulturpflanzen und Unkräuter in mineralischem, humusarmen Ackerboden ausgesät und leicht mit Bodenpartikeln abgedeckt. Unmittelbar nach der Aussaat, auf jeden Fall vor dem Aufkeimen der im Boden befindlichen Samenkörner, wurden die erfindungsgemäßen Wirkstoffe in Form von Spritzpulvern oder Emulsionskonzentraten auf die vegetationsfreie Bodenoberfläche gleichmäßig aufgespritzt.

Vier Wochen nach der Behandlung wurden die Pflanzen abschließend auf Schädigung bzw. Abtötung bonitiert, wobei inzwischen unbehandelt herangewachsene Kontrollpflanzen als Bezug dienten.

Wirksamkeit in % bei Anwendung von 0,5—8 kg/ha Aktivsubstanz im Vorauflaufverfahren

| | kg/ha | Kultur-senf | Zucker-rübe | Flug-hafer | einj. Rispe | A-fuchs-schwanz | Ausfall-getreide |
|---|---|---|---|---|---|---|---|
| 3,5-Dimethyl-Benzoesäure-allylamid | 0,5 | 0 | 0 | 95 | 98 | 60 | 90 |
| | 1 | 0 | 0 | 100 | 100 | 75 | 95 |
| | 2 | 0 | 0 | 100 | 100 | 90 | 100 |
| | 4 | 0 | 10 | 100 | 100 | 100 | 100 |
| | 8 | 10 | 20 | 100 | 100 | 100 | 100 |
| 3,5-Dimethyl-Benzoesäure-propargylamid | 0,5 | 0 | 0 | 70 | 90 | 75 | 60 |
| | 1 | 0 | 0 | 85 | 100 | 95 | 80 |
| | 2 | 0 | 0 | 100 | 100 | 98 | 100 |
| | 4 | 0 | 0 | 100 | 100 | 100 | 100 |
| | 8 | 10 | 10 | 100 | 100 | 100 | 100 |

Vergleichsbeispiel 1

Zum Vergleich wurden das Handelsherbizid Kerb 50 W, das seit längerer Zeit zur Bekämpfung von Unkräutern und Ungräsern im Vorauflaufverfahren eingesetzt wird und 3,5-Dichlorbenzoesäureallylamid nach den gleichen, wie in Beispiel 3 beschriebenen Kriterien, getestet.

Wirksamkeit in % bei Anwendung von 0,5—8 kg/ha Aktivsubstanz

| | kg/ha AS | Kultur-senf | Zucker-rübe | Flug-hafer | einj. Rispe | A.-fuchs-schwanz | Ausfall-getreide |
|---|---|---|---|---|---|---|---|
| Propyzamide (Kerb 50 W) | 0,5 | 10 | 65 | 95 | 95 | 90 | 65 |
| | 1 | 40 | 85 | 100 | 100 | 100 | 75 |
| | 2 | 95 | 90 | 100 | 100 | 100 | 95 |
| | 4 | 98 | 95 | 100 | 100 | 100 | 100 |
| | 8 | 100 | 98 | 100 | 100 | 100 | 100 |
| 3,5-Dichlor-Benzoesäure-allylamid | 0,5 | 10 | 10 | 40 | 75 | 20 | 30 |
| | 1 | 40 | 25 | 75 | 85 | 45 | 65 |
| | 2 | 50 | 40 | 95 | 98 | 60 | 95 |
| | 4 | 75 | 75 | 100 | 100 | 75 | 98 |
| | 8 | 90 | 85 | 100 | 100 | 90 | 100 |

Beispiel 3 und Vergleichsbeispiel 1 machen die herausragende Kulturpflanzen-Toleranz der erfindungsgemäßen Wirkstoffe gegenüber den Vergleichsmitteln bei ebenbürtiger Wirkung auf Ungräser deutlich.

Der Vergleich von 3,5-Dichlorbenzoesäureallylamid mit dem erfindungsgemäßen 3,5-Dimethylbenzoesäureallylamid demonstriert die für die Kulturpflanzenverträglichkeit entscheidende 3,5-Dimethylstellung.

Beispiel 4

In einer weiteren Versuchsreihe wird die Wirksamkeit der erfindungsgemäßen Stoffe bei Anwendung im Vorsaatverfahren mit Einarbeitung deutlich gemacht. Wirkstoffe werden im allgemeinen immer dann in die oberste Bodenschicht eingearbeitet, wenn eine Verbesserung der Wirksamkeit gegen die zu bekämpfenden Schadpflanzen erzielt werden kann, z. B. bei vorherrschender Bodentrockenheit.

Beim Vorsaatverfahren wurden die Wirkstoffe in Form von Spritzpulvern oder Emulsionskonzentraten auf die vegetationsfreie Bodenoberfläche gleichmäßig aufgespritzt.

Sofort nach der Applikation wurden die Wirkstoffe mit Hilfe eines Rechens 2—3 cm tief in die oberste Bodenschicht eingearbeitet. Das Auslegen der Samenkörner von Kulturpflanzen und Unkräuter wurde 24 Stunden nach der Einarbeitung der Wirkstoffe in die herbizidbehandelte, obere Bodenschicht vorgenommen. Vier Wochen nach der Behandlung wurden die Pflanzen abschließend auf Schädigung bzw. Abtötung bonitiert, wobei inzwischen unbehandelt herangewachsene Kontrollpflanzen als Bezug dienten.

Wirksamkeit in % bei Anwendung von 1 kg/ha Aktivsubstanz im Vorsaatverfahren mit Einarbeitung

| | kg/ha | Winter-raps | Zucker-rübe | Ausfall-getreide | Flug-hafer | einj. Rispe | A.-fuchs-schwanz | Knöte-rich |
|---|---|---|---|---|---|---|---|---|
| 3,5-Dimethyl-Benzoesäure-allylamid | 1 | 0 | 0 | 98 | 100 | 100 | 98 | 100 |
| 3,5-Dimethyl-Benzoesäure-propargylamid | 1 | 0 | 0 | 100 | 100 | 100 | 95 | 98 |

Vergleichsbeispiel 2

Die angeführten Vergleichsmittel sind Handelsherbizide, die seit längerer Zeit in den Kulturen Winterraps und Zuckerrüben zur Bekämpfung von Schadpflanzen im Vorsaatverfahren mit Einarbeitung eingesetzt werden. Außerdem wird wie in Vergleichsbeispiel 1 3,5-Dichlorbenzoesäureallylamid zum Vergleich herangezogen. Im übrigen wurde, wie unter Beispiel 4 beschrieben, verfahren.

Wirksamkeit in % bei Anwendung von 1 kg/ha Aktivsubstanz im Vorsaatverfahren mit Einarbeitung

| | kg/ha | Winter-raps | Zucker-rübe | Ausfall-getreide | Flug-hafer | einj. Rispe | A.-fuchs-schwanz | Knöte-rich |
|---|---|---|---|---|---|---|---|---|
| Trifluralin (Elancolan) | 1 | 40 | 95 | 75 | 95 | 100 | 100 | 95 |
| Triallate (Avadex BW) | 1 | 0 | 0 | 0 | 100 | 100 | 100 | 0 |
| 3,5-Dichlor-Benzoesäure-allylamid | 1 | 60 | 35 | 95 | 100 | 100 | 70 | 85 |

Beispiel 4 zeigt, zusammen mit Vergleichsbeispiel 2, die größere Kulturpflanzentoleranz der erfindungsgemäßen Wirkstoffe gegenüber den Vergleichssubstanzen bei ebenbürtiger Wirkung auf Ungräser.

## Patentansprüche

1. Verbindungen der allgemeinen Formel

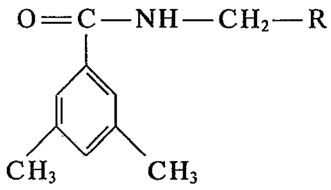

wobei R den Vinyl- oder den Äthinylrest bedeutet.

2. Herbizid wirksame Zusammensetzungen, die mindestens eine Verbindung nach Anspruch 1 enthalten.

3. Herbizid wirksame Zusammensetzungen, die neben den Verbindungen nach Anspruch 1 noch eine oder mehrere pestizid oder herbizid wirksame Verbindungen enthalten.

4. Herbizid wirksame Zusammensetzungen nach Anspruch 2, die im Vorsaatverfahren mit Einarbeitung angewendet werden.

5. Herbizid wirksame Zusammensetzungen nach Anspruch 2, die alleine, oder als Mischungen mit festen oder flüssigen Verdünnungsmitteln, oder als Lösungen in festen oder flüssigen Lösungsmitteln angewandt werden.

6. Verfahren zur Herstellung der Verbindungen nach Anspruch 1, dadurch gekennzeichnet, daß 3,5-Dimethylbenzoesäure mit Thionylchlorid zum entsprechenden Säurechlorid umgesetzt wird und daß das Säurechlorid mit Allylamin bzw. Propargylamin, gegebenenfalls unter Verwendung einer Hilfsbase, in das entsprechende Amid übergeführt wird.

## Claims

1. Compounds of the general formula

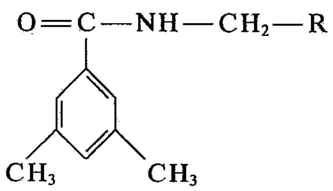

wherein R represents the vinyl radical or the ethinyl radical.

2. Herbicides containing at least one of the compounds defined in Claim 1.

3. Herbicides which contain one or several other pesticidal or herbicidal compounds besides those compounds defined in Claim 1.

4. Herbicides according to Claim 2, which are used in a pre-seeding process with the herbicide being worked into the soil.

5. Herbicides according to Claim 2, which are used alone or in mixtures with solid or liquid diluents, or as solutions in solid or liquid solvents.

6. A process for the manufacture of compounds according to Claim 1, characterized in that 3,5-dimethylbenzoic acid is reacted with thionyl chloride to form the corresponding acid chloride, and that said acid chloride is converted into the corresponding amide by reaction with allylamine and/or propargylamine, optionally in the presence of an auxiliary base.

## Revendications

1. Composés répondant à la formula générale

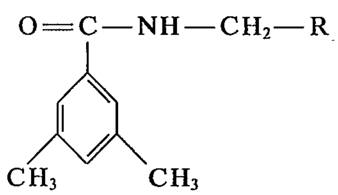

dans laquelle R représente un radical vinyle ou un radical éthynyle.

2. Compositionsherbicides contenant au moins un composé selon la revendication 1.

3. Compositions herbicides qui, en plus des composés selon la revendication 1, contiennent un ou plusieurs composés ayant une action pesticide ou herbicide.

4. Compositions herbicides selon la revendication 2, qui sont appliquées en pré-semis avec incorporation.

5. Compositions herbicides selon la revendication 2, qui sont appliquées seules ou sous forme de mélanges avec des diluants solides ou liquides ou sous la forme de solutions dans des solvants solides ou liquides.

6. Procédé de préparation des composés selon la revendication 1, procédé caractérisé en ce qu'on fait réagir l'acide diméthyl-3,5 benzoïque avec le chlorure de thionyle pour obtenir le chlorure d'acide correspondant et on transforme le chlorure d'acide, par réaction avec l'allylamide ou la propargylamine, éventuellement en utilisant une base auxiliaire, en l'amide correspondant.